# EUROPÄISCHE PATENTANMELDUNG

(11) **EP 1 860 564 A1**
(43) Veröffentlichungstag der Anmeldung: **28.11.2007**
(21) Anmeldenummer: 06010923.8
(22) Anmeldetag: 26.05.2006
(51) Int. Cl.: G06F 11/20, G05B 19/41

(54) **Verfahren und Vorrichtung zum Austausch von Daten auf Basis des OPC-Kommunikationsprotokolls zwischen redundanten Prozessautomatisierungskomponenten**

(71) Anmelder: SIEMENS AKTIENGESELLSCHAFT, 80333 München (DE)
(72) Erfinder: Jordan, Carsten, 91056 Erlangen (DE); Kleyer, Dieter, 91074 Herzogenaurach (DE); Schmidt, Lothar, 91330 Eggolsheim (DE); Zimmer, Axel, 91085 Weisendorf (DE)

(57) **Zusammenfassung**

Die Erfindung betrifft ein Verfahren und eine Vorrichtung zum Austausch von Daten auf Basis des OPC-Kommunikationsprotokolls, wobei zumindest ein Bereitschafts-OPC-Server (24) parallel zu einem Master-OPC-Server (22) geschaltet wird. Erfindungsgemäß ist ein OPC-Client (28) über eine erste Kommunikationsverbindung (26) mit dem Master-OPC-Server (22) und über eine zumindest zweite Kommunikationsverbindung (26) mit dem zumindest einen Bereitschafts-OPC-Server (24) verbunden. Der OPC-Client (28) tauscht über die erste Kommunikationsverbindung (26) und den Master-OPC-Server und über die zumindest zweite Kommunikationsverbindung (26) und den zumindest einen Bereitschafts-OPC-Server (24) mit Automatisierungsgeräten (16, 16') Daten aus und wertet die von dem Master-OPC-Server (22) und dem zumindest einen Bereitschafts-OPC-Server (24) kommenden Daten aus. Im Fehlerfall wird von dem OPC-Client (28) zumindest teilweise von dem Master-OPC-Server (22) auf den zumindest einen Bereitschafts-OPC-Server (24) so umgeschaltet, dass die Programmausführung stoßfrei an der gleichen Stelle fortgeführt wird.

## Beschreibung

Die Erfindung betrifft ein Verfahren zum Austausch von Daten auf Basis des OPC-Kommunikationsprotokolls, wobei zumindest ein Bereitschafts-OPC-Server parallel zu einem Master-OPC-Server geschaltet wird. Die Erfindung betrifft ferner eine Vorrichtung, die dazu ausgebildet, das erfindungsgemäße Verfahren durchzuführen.

Der Datenaustausch bzw. der Austausch der Prozessvariablen erfolgt dabei auf Grundlage von OPC. OPC ist ein standardisiertes Kommunikationsprotokoll, welches von der OPC-Foundation (www.opcfoundation.org) spezifiziert ist. OPC steht dabei für OLE ("Object linking and embedding") for Process Control. OPC ist ein offener Standard.

Prozessautomatisierungssysteme werden für gewöhnlich in drei hierarchisch angeordnete Automatisierungsebenen eingeteilt. In der oberen Automatisierungsebene, welche oft als Leitebene oder Betriebsebene bezeichnet wird, kommen überwiegend Personal Computer zum Einsatz. Die dortigen Aufgaben sind beispielsweise die Bedienung, Beobachtung, Darstellung, Archivierung und Optimierung der Prozessvorgänge. In der darunter liegenden Steuerungsebene (Control layer) werden, wegen ihrer überaus hohen Verfügbarkeit, bevorzugt sog. Speicherprogrammierte Steuerungen (SPS) eingesetzt, welche, da diese meist immer nur einen Teilprozess steuern, auch dezentrale Automatisierungseinheiten genannt werden. Die SPS erfassen über entsprechende Verbindungen die von Sensoren erfassten Prozessmesswerte, wobei die Sensoren direkt am jeweiligen Teilprozess, beispielsweise an einer Turbine oder einem elektrischen Generator, in der sog. Feldebene Messwerte erfassen. Die von den Sensoren erfassten Prozessmesswerte können auch von in der Feldebene angeordneten Mikrokontrollern an die jeweilige oder jeweiligen SPS weitergegeben werden oder von den Mikrokontrollern selbst gebildet werden. In gleicher Weise kann die SPS über Steuersignale und ggf. über die Mikrokontroller, die in der Feldebene angeordneten Aktoren ansprechen, um die Teilprozesse, beispielsweise die Turbine, zu beeinflussen.

Automatisierungstechnische Geräte, wie z.B. Speicherprogrammierte Steuerungen, wie sie beispielsweise in der Steuerebene vorkommen, und Personal Computer, wie sie beispielsweise in der Betriebsebene eines großen Kraftwerks vorkommen, kommunizieren mit- und untereinander meist durch proprietäre Kommunikationsprotokolle. Diese Kommunikationsprotokolle unterscheiden sich meist nicht nur zwischen unterschiedlichen Herstellern, sondern oft auch zwischen Geräten des gleichen Herstellers. Dies macht eine Kommunikation mit anderen automatisierungstechnischen Geräten ohne aufwendige Maßnahmen unmöglich. So ist es nur unter hohen Kosten möglich eine solche bestehende, automatisierte Anlage mit automatisierungstechnischen Geräten oder Software-Programmen anderer Hersteller zu erweitern, abzuändern oder zu modernisieren.

Um die Kommunikationsschnittstellen zwischen den verschiedenen Geräten und Softwareprogrammen zu normieren und um so die Kommunikation zu vereinheitlichen, wurde die OPC-Schnittstelle entwickelt und als Standard im Bereich der Prozessautomatisierung vereinbart. Vorwiegend wird heutzutage eine auf OPC basierende Kommunikation zwischen der Betriebsebene und der Steuerungsebene angewendet. Anwendbar ist eine solche OPCbasierte Kommunikation auch zwischen einer Geschäfts/Büro-Ebene und der Betriebsebene oder innerhalb der gleichen Ebenen. Über OPC-Verbindungen werden Daten bzw. Prozessvariablen ausgetauscht bzw. übertragen.

Der Datenaustausch einer OPC-Kommunikation erfolgt im allgemeinen über n aktive Verbindungen, wobei für eine auf OPC basierte Kommunikation eine immer höhere Verfügbarkeit der Kommunikation mit entsprechend kürzeren Ausfallzeiten oder Ausfallhäufigkeiten verlangt wird. Aus diesem Grunde ist auch für eine auf OPC basierende Kommunikation eine sichere OPC-Verbindung wünschenswert.

Um eine OPC-Verbindung sicherer zu realisieren, ist aus dem Stand der Technik beispielsweise bekannt, die Hardware zu duplizieren, d.h., dass die gesamte Verbindung getrennt von einander hardwaremäßig mindestens zweifach vorhanden ist. Im Fehlerfalle wird dann auf die fehlerfreie Hardwareverbindung umgeschaltet. Jedoch wird bei dieser Lösung der Zustand der Bedienung nicht berücksichtigt. Dies hat zur Folge, dass nach einem Umschaltvorgang die Bildanwahl (Anlagenbilder und/oder Bedienbilder) erneut erfolgen muß. In kritischen Anlagenzuständen geht hierbei wertvolle Zeit verloren, so dass gefährlich Bedienpausen entstehen können. Allein durch eine Parallelschaltung von OPC-Client-Server-Verbindungen bzw. OPC-Linien kann daher eine hochverfügbare OPC-Verbindung nicht realisiert werden, da bei Ausfall einer OPC-Linie eine kontinuierliche Bedienung nicht gewährleistet ist. So können Bedienbilder der häufig in der Betriebsebene angeordneten HMI's (Human-Machine-Interfaces) durch die Umschaltung gestört werden und müssen deshalb zeitaufwendig durch erneute Abfrage erneuert werden. Ebenso können Bedieneingaben und Steuerbefehle verloren gehen. Insbesondere bei zeitkritischen Operationen ist dies ein erheblicher Nachteil, welcher zu gefährlichen Anlagenzuständen führen kann. Im Weiteren müssen dadurch Archive mehrfach gehalten werden, da eine lückenlose Erfassung und Archivierung in der Umschaltphase nicht sicher gestellt ist. Ein weiterer Nachteil besteht darin, dass in der Umschaltphase oder bei der Re-Integration Prozesszustände und Prozessalarme aktualisiert werden müssen. Zwischenzeitliche Ereignisse (z.B. Änderungen und Alarme) können hierbei verloren gehen.

Um solch ein kontinuierliches und unterbrechungsfreies Bedienen und Beobachten der Automatisierungsebene von der Leitebene aus auch bei einem Rechnerausfall sicherzustellen, wurden bisher lediglich proprietäre Lösungen eingesetzt, welche beispielsweise bei Änderungen nur wenig Spielraum bei der Auswahl neuer Geräte lassen oder mit sehr hohem Aufwand angepasst werden müssen.

Aufgabe der Erfindung ist es, ein Verfahren und eine Vorrichtung zum Austausch von Daten auf Basis des OPC-Kommunikationsprotokolls anzugeben, mit dem bzw. der durch Umschaltvorgänge bedingte Komplikationen, insbesondere Ausfallzeiten vermieden werden.

Die Aufgabe ist erfindungsgemäß mit dem eingangs genannten Verfahren gelöst, wobei ein OPC-Client über eine erste Kommunikationsverbindung mit dem Master-OPC-Server und über eine zumindest zweite Kommunikationsverbindung mit dem zumindest einen Bereitschafts-OPC-Server verbunden ist, und bei dem der OPC-Client über die erste Kommunikationsverbindung und den Master-OPC-Server und über die zumindest zweite Kommunikationsverbindung und den zumindest einen Bereitschafts-OPC-Server mit Automatisierungsgeräten Daten austauscht und die von dem Master-OPC-Server und dem zumindest einen Bereitschafts-OPC-Server kommenden Daten auswertet, und bei dem im Fehlerfall von dem OPC-Client zumindest teilweise von dem Master-OPC-Server auf den zumindest einen Bereitschafts-OPC-Server so umgeschaltet wird, dass die Programmausführung stoßfrei an der gleichen Stelle fortgeführt wird.

Erfindungsgemäß wird nicht, wie bei der OPC-Kommunikation heute üblich, zu jedem OPC-Server - dessen wesentliche Aufgaben darin bestehen, die Daten bzw. Prozesswerte aus den Feldebenen bzw. Controllerebenen zu beschaffen und diese Daten im OPC-Format bereitzustellen, und ferner Status und Fehlerinformationen zu ermitteln und aufzubereiten - auf einem separatem Computer ein OPC-Client betrieben bzw. installiert, sondern es werden parallel betriebene bzw. geschaltete, d.h. redundant ausgeführte OPC-Server, umfassend einen Master-OPC-Server und wenigstens einen Bereitschafts-OPC-Server, über getrennte Kommunikationsverbindungen mit einem gemeinsamen OPC-Client verbunden. Der OPC-Client ist dazu ausgebildet, aus den empfangenen Daten einen Störfall zu erkennen. Hat der OPC-Client einen Störfall erkannt, schaltet der OPC-Client von dem aktiven Master-OPC-Server, über den bei störungsfreiem Betrieb z.B. des Kraftwerks der Austausch von Daten und Prozessvariablen zur Steuerung bzw. Regelung des Kraftwerks erfolgt, zumindest teilweise auf den Bereitschafts-OPC-Server (auch Standby-OPC-Server genannt) um. Die Umschaltung kann vollständig erfolgen, d.h. dass der Bereitschafts-OPC-Server vollständig die Steuer/Regel-Aufgaben des Master-OPC-Servers übernimmt, wie es bei einem sehr ausgeprägten Störfall der Fall ist. Bei einem Störfall mit kleinerer Ausprägung, also wenn beispielsweise bei einer redundant ausgelegten Komponente der Feldebene, umfassend eine Master-Komponente und eine Bereitschafts-Komponente, die Master-Komponente ausgefallen ist, kann lediglich eine teilweise vorgenommene Umschaltung erfolgen, so dass die Steuerung/Regelung der Bereitschafts-Komponente über den Bereitschafts-OPC-Server erfolgt, während die Steuerung/Regelung der übrigen Komponenten weiterhin über den Master-OPC-Server erfolgt. So kann erfindungsgemäß die Gesamtverfügbarkeit einer Automatisierungslösung erhöht werden.

Die erfindungsgemäße Verbindung des Bereitschafts-OPC-Servers und des Master-OPC-Servers mit einem gemeinsamen OPC-Client ermöglicht im Gegensatz zu bekannten Lösungen eine unterbrechungsfreie Umschaltung. Die Bedienung wird nicht unterbrochen und Bedieneingaben gehen nicht verloren und müssen demzufolge nicht wiederholt werden. Archive werden konsistent aktualisiert und weisen somit keine Lücken auf. Ein explizites Update ist nicht erforderlich. Darüber hinaus kann das "Operating" der Kraftwerksanlage auch im Fehlerfall unterbrechungsfrei weitergeführt werden. Eine gesonderte Anwahl der Anlagen und Bedienbilder ist nicht erforderlich, sondern die vor der Störung vorgenommene Anwahl der Anlagen und Bedienbilder wird automatisch übernommen und eine lückenlose Übernahme aller Alarme, Meldungen oder Zustandsanzeigen wird sichergestellt. Unabhängig von einer Hardwarestörung kann der Anlagenfahrer bzw. Bediener auch in kritischen Situationen Fehlerzustände in der Anlage erkennen und die Anlage schell und sicher bedienen. Störungen und die mit hohen Kosten verbundenen Anlagenstillstände werden hierdurch vermieden.

Bei einer vorteilhaften Weiterbildung des erfindungsgemäßen Verfahrens tauschen der Master-OPC-Server und der zumindest eine Bereitschafts-OPC-Server über redundant ausgeführte Verbindungslinien mit den Automatisierungsgeräten Daten aus, wobei der Master-OPC-Server und der zumindest eine Bereitschafts-OPC-Server Zugriff auf die gleichen oder dieselben Automatisierungsgeräte haben und mit diesen Daten austauschen. Bevorzugt sind hierbei die Automatisierungsgeräte, beispielsweise Controller, ebenfalls redundant in Form eines Standby-Controller und eines Master-Controller, aufgebaut, wobei das Redundanzmanagement von den Controllern autark durchgeführt wird und der Master-OPC-Server über die redundant ausgeführten Verbindungslinien jeweils mit den Master-Controllern und der Bereitschafts-OPC-Server jeweils mit den Standby-Controllern verbunden ist. Fällt ein aktiver Master-Controller aus oder weist eine Störung auf, wird die Steuerung/Regelung von dem Standby-Controller übernommen und der Austausch der Daten bzw. Prozessvariablen erfolgt über den Bereitschafts-OPC-Server zu dem OPC-Client. Neben der redundanten Auslegung der Controller in der Kontrollebene kann auch die I/O-Ebene auf ähnliche Weise redundant ausgelegt werden. Insgesamt betrachtet wird so die Gesamtverfügbarkeit einer Automatisierungslösung durch Nutzung der beiden OPC-Server in Verbindung mit einer "bediengranularen" Umschaltmöglichkeit deutlich erhöht.

Bei einer weiteren vorteilhaften Weiterbildung des erfindungsgemäßen Verfahrens ist der OPC-Client redundant ausgebildet, umfassend einen Master-OPC-Client und wenigstens einen Bereitschafts-OPC-Client, wobei im Fehlerfall zwischen dem Master-OPC-Client und dem wenigstens einen Bereitschafts-OPC-Client so umgeschaltet wird, dass die Programmausführung stoßfrei an der gleichen Stelle fortgeführt wird, wobei der Master-OPC-Client und der wenigstens eine Bereitschafts-OPC-Client für den Master-OPC-Server und den zumindest einen Bereitschafts-OPC-Server nur als der OPC-Client erkennbar sind.

Durch die so erfindungsgemäß vorgenommene Redundierung des OPC-Clients wird auch dieser zusätzlich zu den OPC-Servern abgesichert, die diesen nur als einen OPC-Client erkennen. Bevorzugt ist hierbei der redundant ausgebildete OPC-Client nach dem Single-System-Image-Prinzip oder nach dem Single-Application-Image-Prinzip ausgebildet bzw. arbeitet nach diesen Prinzipien. Single System Image bedeutet, dass der gesamte Speicher bzw. das gesamte Speicher-Image des Master-OPC-Clients auch auf dem Bereitschafts-OPC-Client verfügbar ist, während beim Single-Aplikation-Image die Applikation identisch ist, Systemkomponenten aber durchaus verschieden sein können. Im Fehlerfall wird direkt zum Bereitschafts-OPC-Client (Standby-Client) umgeschaltet, und zwar derart, dass die Programmausführung an der gleichen Stelle wie im Master-OPC-Client fortgeführt wird und die Bedienoperation im gleichen Schritt fortgeführt werden kann. Insgesamt betrachtet wird so erfindungsgemäß auch bei einem Ausfall bzw. einer Störung des OPC-Clients eine unterbrechungsfreie Umschaltung, wie oben dargelegt, realisiert.

Bei einer besonders praktischen Weiterbildung des erfindungsgemäßen Verfahrens schaltet der OPC-Client in Abhängigkeit vom Fehlergrad zumindest teilweise von dem Master-OPC-Server auf den zumindest einen Bereitschafts-OPC-Server um.

Bei einer deratigen selektiven Redundanzüberwachung gehen nur einzelne Prozesswerte bzw. Daten, die im Master-OPC-Server als gestört gemeldet werden, vom Bereitschafts-OPC-Server in das Prozessabbild des OPC-Clients ein. Die Selektion der Prozesswerte bzw. Daten, also die Entscheidung, ob ein Wert vom Master-OPC-Server oder vom Bereitschafts-OPC-Server genutzt wird, geschieht auf Basis eines Fehlergrads, vorzugsweise in Form des sog. OPC Quality Codes. Der OPC-Client entscheidet hierbei stets für jeden einzelen Prozesswert bzw. jedes einzelne Datum neu, wobei der Wert mit der "besseren" Qualität selektiert wird, gemäß beispielsweise folgender "Entscheidungsformel": GOOD>UNCERTAIN>BAD.

Die Erfindung betrifft ferner eine Vorrichtung zur Durchführung des erfindungsgemäßen Verfahrens, bei der zumindest ein Bereitschafts-OPC-Server parallel zu einem Master-OPC-Server geschaltet ist, und bei der ein OPC-Client über eine erste Kommunikationsverbindung mit dem Master-OPC-Server und über eine zumindest zweite Kommunikationsverbindung mit dem zumindest einen Bereitschafts-OPC-Server verbunden ist, und bei welcher der OPC-Client dazu ausgebildet ist, über die erste Kommunikationsverbindung und den Master-OPC-Server und über die zumindest zweite Kommunikationsverbindung und den zumindest einen Bereitschafts-OPC-Server mit Automatisierungsgeräten Daten auszutauschen und die von dem Master-OPC-Server und dem zumindest einen Bereitschafts-OPC-Server kommenden Daten auszuwerten, wobei der OPC-Client ferner dazu ausgebildet ist, im Fehlerfall zumindest teilweise von dem Master-OPC-Server auf den zumindest einen Bereitschafts-OPC-Server so umzuschalten, dass die Programmausführung stoßfrei an der gleichen Stelle fortgeführt wird.

Bei einer vorteilhaften Weiterbildung ist hierbei der OPC-Client redundant ausgebildet, umfassend einen Master-OPC-Client und wenigstens einen Bereitschafts-OPC-Client, wobei der OPC-Client dazu ausgebildet ist, im Fehlerfall zwischen dem Master-OPC-Client und dem wenigstens einen Bereitschafts-OPC-Client so umzuschalten, dass die Programmausführung stoßfrei an der gleichen Stelle fortgeführt wird, wobei der Master-OPC-Client und der wenigstens eine Bereitschafts-OPC-Client für den Master-OPC-Server und den zumindest einen Bereitschafts-OPC-Server nur als der OPC-Client erkennbar sind. Bevorzugt ist hierbei zum einen, dass der redundant ausgebildete OPC-Client auf einem fehlertoleranten Computer ausgebildet ist. Alternativ ist der Master-OPC-Client auf einem fehlertoleranten Computer ausgebildet und der wenigstens eine Bereitschafts-OPC-Client auf wenigstens einem weiteren fehlertoleranten Computer ausgebildet.

Nachfolgend werden Ausführungsbeispiele von Vorrichtungen zum Austausch von Daten auf Basis des OPC-Kommunikations-protokolls näher erläutert. Es zeigt:
- FIG 1: eine schematische Darstellung einer erfindungsgemäßen Vorrichtung zum Austausch von Daten auf Basis des OPC-Kommunikationsprotokolls,
- FIG 2: eine schematische Darstellung einer aus dem Stand der Technik bekannten Vorrichtung zum Austausch von Daten auf Basis des OPC-Kommunikationsprotokolls,
- FIG 3: eine schematische Darstellung einer weiteren erfindungsgemäßen Vorrichtung zum Austausch von Daten auf Basis des OPC-Kommunikationsprotokolls, und
- FIG 4: eine schematische Darstellung einzelner Komponenten eines Kraftwerkautomatisierungssystems.

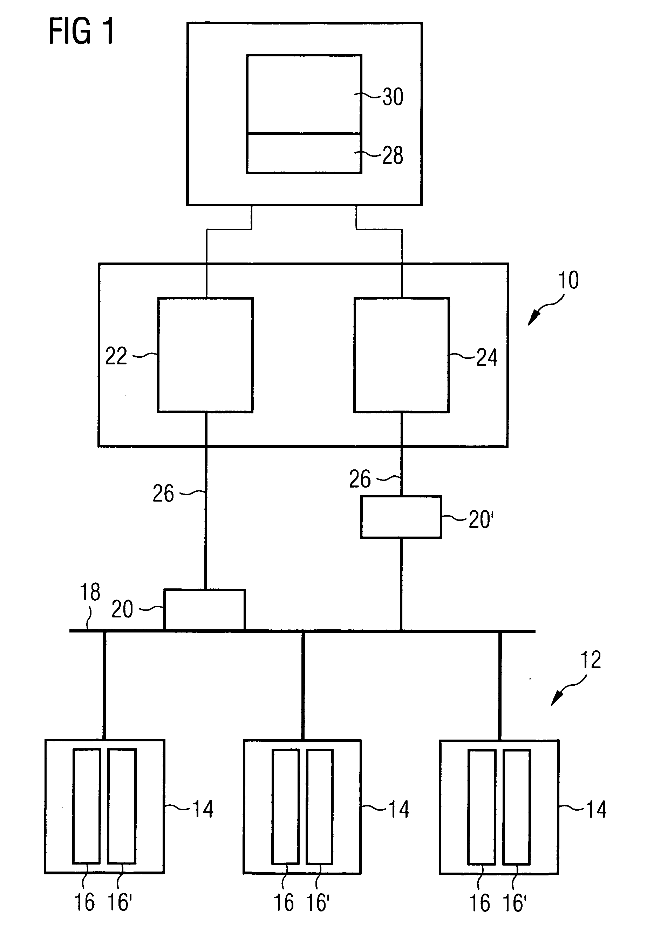

Die FIG 1 zeigt eine erfindungsgemäße Vorrichtung 10 zum Austausch von Daten auf Basis des OPC-Kommunikations-protokolls. Die untere Bildhälfte zeigt zunächst eine typische Automatisierungsebene bzw. Feldebene 12, die aus drei einzelnen Automatisierungsservern 14 besteht, welche im Kraftwerksbetrieb jeweils unterschiedliche Steuer- bzw. Regelfunktionen übernehmen. Jeder der drei Automatisierungsserver 14 ist mittels zweier Module in Form von zwei Controllern, nämlich einem Master-Controller 16 und einem Standby-Controller 16' redundant ausgelegt. Daten bzw. Prozessvariablen der einzelnen Automatisierungsserver 14 werden über einen ebenfalls redundant ausgelegten Anlagenbus 18 (die Redundanz ist in FIG 1 durch die breite Strichstärke symbolisiert) über zwei OPC-Controller-Schnittstellen 20, 20' auf einen Master-OPC-Server 22 bzw. einen Bereitschafts-OPC-Server 24 einer separaten Server-Hardware übertragen. Einer der Busse des redundant ausgelegten Anlagenbusses 18 stellt hierbei über die OPC-Controller-Schnittstellen 20 eine Verbindung zu dem Master-OPC-Server 22 her; der andere Bus des redundant ausgelegten Anlagenbusses 18 stellt über die andere OPC-Controller-Schnittstelle 20' eine Verbindung zu dem Bereitschafts-OPC-Server 24 her.

Die auf die beiden OPC-Server 22, 24 übertragenen Daten bzw. Prozessvariabeln werden von den beiden OPC-Serven 22, 24 in das OPC-Format umgewandelt und über zwei getrennte Kommunikationsverbindungen 26 auf einen gemeinsamen OPC-Client 28 übertragen. Der OPC-Client 28 steuert und überwacht die beiden OPC-Server 22, 24 und ist als Zugriffsschicht auf einem fehlertoleranten HMI (Human Machine Interface)-Server 30 installiert. Der OPC-Client 28 ist nach dem Singe-Application-Image-Prinzip redundant ausgebildet.

Im Störfall, also wenn dem OPC-Client 28 ein Fehler bzw. eine Störung gemeldet wird, schaltet dieser von dem Master-OPC-Server 22, über den während des störungsfreien Kraftwerksbetriebs die Steuerung bzw. Regelung einer Kraftwerkskomponente erfolgt, auf den Bereitschafts-OPC-Server 24 um. Die Umschaltung kann hierbei, insbesondere bei einer umfangreichen Störung bzw. einem umfangreichen Ausfall vollständig erfolgen, so dass sämtliche Steuer/Regel-Vorgänge über den Bereitschafts-OPC-Server 24 erfolgen. Es kann jedoch, in Abhängigkeit vom Ausmaß des Fehlers, lediglich nur eine teilweise Umschaltung erfolgen. Dies ist insbesondere dann gegeben, wenn einer der Master-Controller 16 eine Störung an den OPC-Client 28 meldet. In diesem Fall schaltet der OPC-Client 28 derart auf den Bereitschafts-OPC-Server 24 um, dass über diesen nunmehr die Steuerung/Regelung des zur Verwirklichung der Redundanz vorgesehenen Standby-Controllers 16' erfolgt. Hierbei erfolgt über den Bereitschafts-OPC-Server 24 lediglich die Steuerung/Regelung des Standby-Controllers 16'während die Steuerung /Regelung der übrigen Master-Controller 16 nach wie vor über den Master-OPC-Server 22 erfolgt. So kann erfindungsgemäß die Gesamtverfügbarkeit einer Automatisierungslösung erhöht werden. Durch die redundante Auslegung des OPC-Clients 28 wird auch dieser, zusätzlich zu den OPC-Servern 22, 24, abgesichert, die diesen nur als einen OPC-Client 28 erkennen.

Ferner erfolgt die Umschaltung - sowohl vom Master-OPC-Server 22 auf den Bereitschafts-OPC-Server 24 als auch vom Master-OPC-Client auf den Bereitschafts-OPC-Client (nicht dargestellt) - erfindungsgemäß, im Gegensatz zu bekannten Lösungen, unterbrechungsfrei, so dass die Bedienung nicht unterbrochen wird und Bedieneingaben nicht verloren gehen.

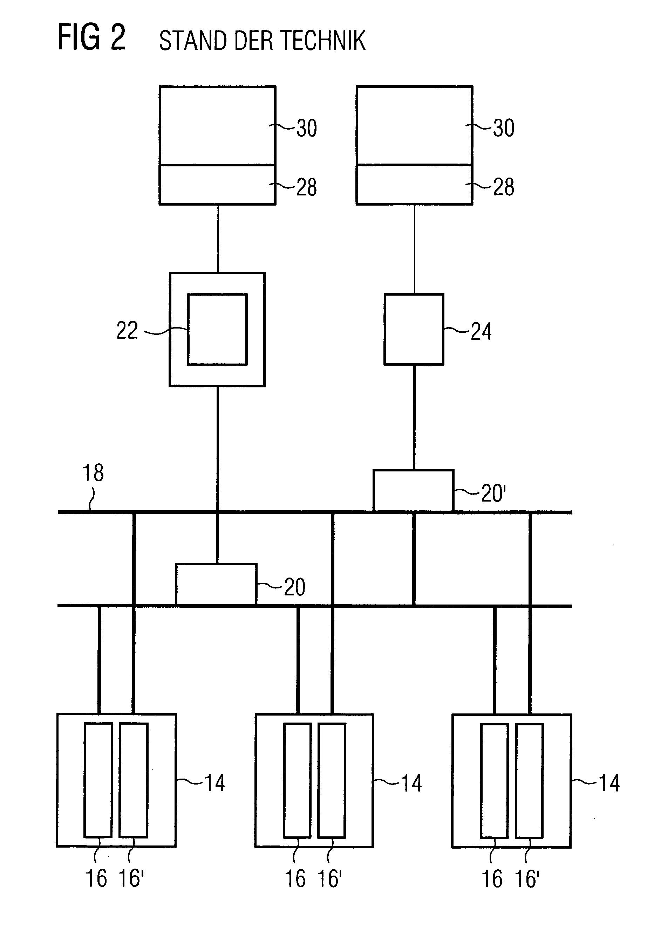

FIG 2 zeigt schematisch zum Vergleich mit der in FIG 1 dargestellten erfindungsgemäßen Vorrichtung eine aus dem Stand der Technik bekannte Vorrichtung zum Austausch von Daten auf Basis des OPC-Kommunikationsprotokolls. Auch hier sind die einzelnen Controller 16, 16' samt Anlagenbus 18 redundant ausgelegt. Jedoch sind hier der Bereitschafts-OPC-Server 24 und der Master-OPC-Server 22 nicht über einen gemeinsamen OPC-Client verbunden, wie es erfindungsgemäß der Fall ist. Eine störungsfreie Umschaltung zwischen derart separierten OPC-Servern 22, 24 kann daher nicht erfolgen.

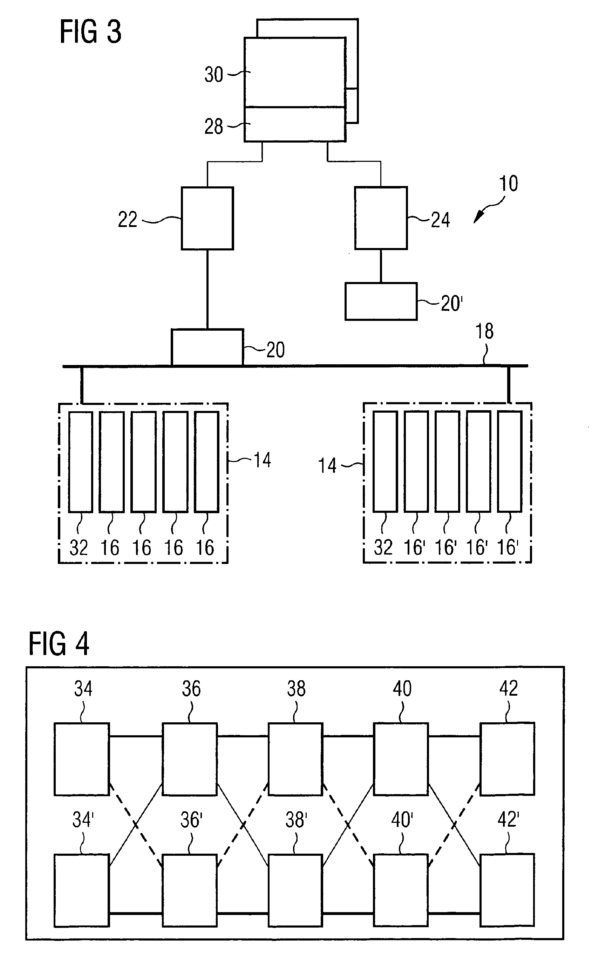

FIG 3 zeigt eine schematische Darstellung einer weiteren erfindungsgemäßen Vorrichtung 10 zum Austausch von Daten auf Basis des OPC-Kommunikationsprotokolls. Zwei Automatisierungsserver 14, die jeweils mit einer Anzahl von Modulen in Form von Controllern 16, 16'versehen sind und jeweils eine CPU 32, 32' aufweisen, sind redundant ausgelegt, d.h. das die einzelnen Controller 16, 16', die CPU 32, 32' und auch die I/O-Ebene (nicht dargestellt) redundant ausgelegt sind, wobei die Controller 16' und die CPU 32' jeweils die entsprechenden Standby-Controller bzw. die Standby-CPU darstellen. Der Anlagenbus 18 ist dementsprechend ebenfalls redundant ausgelegt. Ferner ist auch hier der OPC-Client 28 auf einem fehlertoleranten HMI (Human Machine Interface)-Server 30 installiert und redundant ausgelegt, wie durch die Graphik symbolisiert.

FIG 4 zeigt eine schematische Darstellung einzelner Komponenten eines Kraftwerkautomatisierungssystems, wobei in der oberen Reihe von links nach rechts schematisch eine Master-HMI-CPU 34, einen Master-OPC-Server 36, eine Master-Anlagenbus-Schnittstelle 38, ein Master-Automatisierungs-system 40 und ein Master I/O-Modul 42 dargestellt sind. In der unteren Reihe sind jeweils unter den einzelnen Komponenten entsprechende Bereitschafts-Komponenten (Standby-Komponenten) 34', 36', 38', 40' und 42'für die redundante Auslegung dargestellt. Die Darstellung in FIG 4 zeigt schematisch wie Verfügbarkeit des Kraftwerkautomatisierungssystems durch ein teilweises Umschalten auf einzelne Bereitschaftskomponenten 34', 36', 38', 40' und 42'erhöht wird. Über den gestrichelt gekennzeichneten Weg können beispielsweise die fehlerhaften Komponenten 36 und 40 ausgeblendet werden, während die intakten Komponenten 34, 38 und 42 der "parallelen Linie" verwendet werden können.

## Patentansprüche

1. Verfahren zum Austausch von Daten auf Basis des OPC-Kommunikationsprotokolls, wobei zumindest ein Bereitschafts-OPC-Server (24) parallel zu einem Master-OPC-Server (22) geschaltet wird,
**dadurch gekennzeichnet, dass** ein OPC-Client (28) über eine erste Kommunikationsverbindung (26) mit dem Master-OPC-Server (22) und über eine zumindest zweite Kommunikationsverbindung (26) mit dem zumindest einen Bereitschafts-OPC-Server (24) verbunden wird, und
dass der OPC-Client (28) über die erste Kommunikationsverbindung (26) und den Master-OPC-Server und über die zumindest zweite Kommunikationsverbindung (26) und den zumindest einen Bereitschafts-OPC-Server (24) mit Automatisierungsgeräten (16, 16') Daten austauscht und die von dem Master-OPC-Server (22) und dem zumindest einen Bereitschafts-OPC-Server (24) kommenden Daten auswertet, und
dass im Fehlerfall von dem OPC-Client (28) zumindest teilweise von dem Master-OPC-Server (22) auf den zumindest einen Bereitschafts-OPC-Server (24) so umgeschaltet wird, dass die Programmausführung stoßfrei an der gleichen Stelle fortgeführt wird.

2. Verfahren nach Anspruch 1, **dadurch gekennzeichnet, dass** der Master-OPC-Server (22) und der zumindest eine Bereitschafts-OPC-Server (24) über redundant ausgeführte Verbindungslinien (18) mit den Automatisierungsgeräten (16, 16') Daten austauschen, wobei der Master-OPC-Server (22) und der zumindest eine Bereitschafts-OPC-Server (24) Zugriff auf die gleichen oder dieselben Automatisierungsgeräte (16, 16') haben und mit diesen Daten austauschen.

3. Verfahren nach Anspruch 1 oder 2, **dadurch gekennzeichnet, dass** der OPC-Client (28) redundant ausgebildet ist, umfassend einen Master-OPC-Client und wenigstens einen Bereitschafts-OPC-Client, wobei im Fehlerfall zwischen dem Master-OPC-Client und dem wenigstens einen Bereitschafts-OPC-Client so umgeschaltet wird, dass die Programmausführung stoßfrei an der gleichen Stelle fortgeführt wird, wobei der Master-OPC-Client und der wenigstens eine Bereitschafts-OPC-Client für den Master-OPC-Server (22) und den zumindest einen Bereitschafts-OPC-Server (24) nur als der OPC-Client (28) erkennbar sind.

4. Verfahren nach Anspruch 3, **dadurch gekennzeichnet, dass** der redundant ausgebildete OPC-Client (28) nach dem Single-System-Image-Prinzip oder nach dem Single-Application-Image-Prinzip redundant ausgebildet ist bzw. arbeitet.

5. Verfahren nach einem der Ansprüche 1 bis 4, **dadurch gekennzeichnet, dass** der OPC-Client (28) in Abhängigkeit vom Fehlergrad zumindest teilweise von dem Master-OPC-Server (22) auf den zumindest einen Bereitschafts-OPC-Server (24) umschaltet.

6. Vorrichtung zum Austausch von Daten auf Basis des OPC-Kommunikationsprotokolls, wobei zumindest ein Bereitschafts-OPC-Server (24) parallel zu einem Master-OPC-Server (22) geschaltet ist,
**dadurch gekennzeichnet, dass** ein OPC-Client (28) über eine erste Kommunikationsverbindung (26) mit dem Master-OPC-Server (22) und über eine zumindest zweite Kommunikationsverbindung (26) mit dem zumindest einen Bereitschafts-OPC-Server (24) verbunden ist, und
dass der OPC-Client (28) dazu ausgebildet ist, über die erste Kommunikationsverbindung (26) und den Master-OPC-Server (22) und über die zumindest zweite Kommunikationsverbindung (26) und den zumindest einen Bereitschafts-OPC-Server (24) mit Automatisierungsgeräten (16, 16') Daten auszutauschen und die von dem Master-OPC-Server (22) und dem zumindest einen Bereitschafts-OPC-Server (24) kommenden Daten auszuwerten, und der OPC-Client (28) ferner dazu ausgebildet ist, im Fehlerfall zumindest teilweise von dem Master-OPC-Server (22) auf den zumindest einen Bereitschafts-OPC-Server (24) so umzuschalten, dass die Programmausführung stoßfrei an der gleichen Stelle fortgeführt wird.

7. Vorrichtung nach Anspruch 6, **dadurch gekennzeichnet, dass** der OPC-Client (28) redundant ausgebildet ist, umfassend einen Master-OPC-Client und wenigstens einen Bereitschafts-OPC-Client, wobei der OPC-Client (28) dazu ausgebildet ist, im Fehlerfall zwischen dem Master-OPC-Client und dem wenigstens einen Bereitschafts-OPC-Client so umzuschalten, dass die Programmausführung stoßfrei an der gleichen Stelle fortgeführt wird, wobei der Master-OPC-Client und der wenigstens eine Bereitschafts-OPC-Client für den Master-OPC-Server (22) und den zumindest einen Bereitschafts-OPC-Server (24) nur als der OPC-Client (28) erkennbar sind.

8. Vorrichtung nach Anspruch 7, **dadurch gekennzeichnet, dass** der redundant ausgebildete OPC-Client (28) nach dem Single-System-Image-Prinzip oder nach dem Single-Application-Image-Prinzip redundant ausgebildet ist bzw. arbeitet.

9. Vorrichtung nach Anspruch 7 oder 8, **dadurch gekennzeichnet, dass** der redundant ausgebildete OPC-Client (28) auf einem fehlertoleranten Computer ausgebildet ist.

10. Vorrichtung nach Anspruch 7 oder 8, **dadurch gekennzeichnet, dass** der Master-OPC-Client auf einem fehlertoleranten Computer ausgebildet ist und der wenigstens eine Bereitschafts-OPC-Client auf wenigstens einem weiteren fehlertoleranten Computer ausgebildet ist.

11. Vorrichtung nach einem der Ansprüche 6 bis 10, **dadurch gekennzeichnet, dass** der OPC-Client (28) dazu ausgebildet ist, in Abhängigkeit vom Fehlergrad zumindest teilweise von dem Master-OPC-Server (22) auf den zumindest einen Bereitschafts-OPC-Server (28) umzuschalten.
